# EUROPEAN PATENT SPECIFICATION

(11) **EP 2 427 251 B1**
(45) Date of publication and mention of the grant of the patent: **06.09.2017**
(21) Application number: 10718321.2
(22) Date of filing: 06.05.2010
(51) Int. Cl.: B01D 9/00

(54) **WASH COLUMN**
WASCHSÄULE
COLONNE DE NETTOYAGE

(30) Priority: 06.05.2009 EP 09159556
(43) Date of publication of application: 14.03.2012
(73) Proprietor: Nederlandse Organisatie voor toegepast- natuurwetenschappelijk onderzoek TNO, 2595 DA 's-Gravenhage (NL)
(72) Inventor: HUISJES, Piet, NL-7441 HK Nijverdal (NL); NIENOORD, Michiel, NL - 2628 VK Delft (NL); VAN DER MEER, Johannes, NL-3632 EW Loenen aan de Vecht (NL); VERDOES, Dirk, NL-7328 VE Apeldoorn (NL)
(74) Representative: V.O.
(86) International application number: PCT/NL2010/050264
(87) International publication number: WO 2010/128856

(56) References cited:
- US-A- 4 830 645
- US-A1- 2004 256 319
- US-A1- 2005 115 363
- US-A1- 2006 013 748
- US-A1- 2009 112 040

## Description

The invention relates to a wash column and a method for processing a suspension in a wash column. In particular, the invention relates to a hydraulic wash column.

A wash column is generally known for processing a suspension of solid particles in a liquid. A wash column can also be used to separate organic crystals from a suspension in an impure melt.

Generally, in a wash column a suspension comprising e.g. a melt with solid particles therein (unmelted or crystallized) is passed through a wash column in order to separate the relatively pure solid particles from the liquid fraction (filtrate or mother liquor). The wash column contains one or more filters, each of which is included in a separate filter pipe which extends in the longitudinal direction through the interior of the wash column, while the suspension is supplied at one end of the column and moves along the filter pipes in the direction of the other end of the column. A wash column in which no moving parts are present to flatten the bed, but in which the movement and distribution of the bed is subject to hydraulic forces only, is referred to as a hydraulic wash column. A hydraulic wash column may or may not comprise filter pipes. Typically, a wash column comprising filter pipes is a hydraulic wash column since the filter pipes obstruct the use of bed flattening means. The mother liquor passes the filters and thus ends up in the filter pipes to be discharged. As via the filters, mother liquor is extracted from the suspension, a porous bed of particles is formed in the wash column. At the other end of the column, means are present for disintegrating or breaking up the bed of particles formed. The discharged solid (crystalline) material is melted and a portion of this melt is fed to the particle bed as washing liquid, in order to wash the particles in their own melt. The wash column can also be used to filter solid (crystalline) material from an (aqueous) suspension and to transfer the filtered solid material to a (saturated) solvent.

US 4 830 645 discloses a so-called 'mechanical' wash column for the concentration of aqueous solutions, not an hydraulic wash column. In a mechanical wash column, the bed is substantially transported by mechanical force, e.g. by the action of a rotating scraper blade. Suspension with ice crystals is supplied and distributed over a filter layer via a rotating blade. The filter layer is a plane filter, arranged at an end of the wash column and extending over the diameter of the wash column. Ice crystals are scraped off from the filter layer.

US 2005/0115363 discloses an apparatus for processing a suspension, comprising a vessel provided with means for supplying the suspension, at least one filtering element, means for discharging liquid coming from said suspension, which liquid passes the filtering element, so that a packed bed can form near said filtering element, means for disintegrating or breaking up said packed bed, means for discharging the washing liquid in which particles from the bed are incorporated, and means for disintegrating the packed bed with the aid of the impulse of the washing liquid.

The document "Melt crystallization", Shaker Verlag, edited by Joachim Ulrich, Heike Glade, Aachen 2003, illustrates the principle of wash-columns by means of a Hydraulic Washing Column in a schematic figure.

WO 03/041833 also published as US2004/0256319 discloses a wash column comprising a suspension division chamber placed above a filtrate collecting chamber. In the suspension distribution chamber a suspension supply line ends. The filtrate is collected in the filtrate collecting chamber. The suspension distribution chamber comprises a distribution cone or distribution plates for distributing the suspension approximately equal over the cross-section of the wash column. To supply the suspension to the chamber of the wash column where the packed bed is formed, a plurality of pipes cross the filtrate collecting chamber to connect the suspension distribution chamber to the bed forming chamber.

A drawback of this wash column arrangement is that it is relatively difficult to feed the suspension in an approximately even distribution over the cross-section of the bed forming chamber between the plurality of filter pipes. Also, solid and/or crystalline suspension may settle and/or may form a crust on the bottom plate of the suspension distribution chamber for example, thereby resulting in a loss of suspension and/or making an approximately even distribution of the suspension more difficult.

An object of the invention is to provide a suspension supply that obviates at least one of the above mentioned draw backs.

Thereto, the invention provides a wash column for processing a suspension of solid particles in a liquid comprising a bed forming chamber in which a packed bed of solid particles can be formed, filtrate extraction means for extracting liquid from the suspension as to form the packed bed of solid particles in the bed forming chamber, and a suspension supply line for supplying the suspension directly to an end of the bed forming chamber, wherein the suspension supply line ends in the bed forming chamber.

'Suspension' is understood to mean a suspension of solid particles in a liquid, such as for instance a crystal slurry (i.e. a slurry of crystals in a melt or in a saturated solvent) or a liquid flow having solid particles suspended therein which comprise a component to be extracted (for instance seeds, such as calendula seed in an extractant, such as hexane) or a liquid flow having solid particles suspended therein which may be transferred into an other liquid. The filtrate extraction means may comprise filters retaining solid particles, but permeable for liquid, such that the liquid may be extracted from the suspension and the solid particles may remain in the bed forming chamber as to form a packed bed of solid particles.

In a hydraulic wash column, the movement of the bed is effected by hydraulic pressure.

By providing a suspension supply line that ends directly in the bed forming chamber, suspension supply means to the bed forming chamber may be relatively simple and compact. Complex arrangements, such as a suspension distribution chamber or a suspension stirring chamber may be omitted. Due to the pressure and/or the speed with which the suspension may be supplied to the bed forming chamber, the flow of the suspension may be turbulent and may be spread approximately evenly over the cross-section of the bed forming chamber to form a bed with an approximately level upper layer. The suspension supply line ends at one end of the bed forming chamber upstream of the bed to be formed, in particular the suspension supply line ends in the bed forming chamber between the bed and an end wall of the bed forming chamber.

Also, in a hydraulic wash column no moving parts are present to flatten and/or to distribute the bed. Therefore, by providing a suspension supply line that ends directly in the bed forming chamber, it is achieved that the bed is formed and/or distributed relatively evenly in the bed forming chamber, also at the edges of the bed forming chamber. In particular when the hydraulic wash column comprises filtrate extraction pipes, it is relatively difficult to obtain an evenly distributed bed. Surprisingly it has been found that the bed is evenly distributed, also between the filtrate extraction pipes, by providing the suspension supply line according to the invention.

By providing a filtrate collecting chamber for collecting the liquid extracted from the suspension through which the suspension supply line crosses to end in the bed forming chamber, a compact wash column may be obtained. The filtrate collecting chamber and the suspension supply line may then be provided at the same end of the bed forming chamber, so a relatively compact wash column may be obtained.

By providing a distribution element at the end of the supply line, the suspension flowing out of the supply line may be spreaded further in the bed forming chamber, and distribution of the suspension over the cross-section of the bed forming chamber may be more reproducible. The additional distribution element may be applied for example, when the suspension flowing out of the supply line may be laminar, or when the diameter of the bed forming chamber is relatively large, or when there are relatively many filtrate extraction pipes. The distribution element may for example be a plate element placed transverse to the flow direction of the suspension at the end of the suspension supply line, or may be a spray head for spraying the suspension axially and/or radially in the bed forming chamber.

By positioning the end of the supply line approximately centrally in the bed forming chamber, the suspension may be spread over approximately the entire cross-section of the bed forming chamber such that also suspension may be spread near the wall of the bed forming chamber and the upper layer of the bed of suspension may be approximately level.

By providing one supply line over approximately 0,25 m² to 1 m² diameter of the bed forming chamber, it may suffice to provide one or relatively few suspension supply lines to the bed forming chamber. By providing few suspension supply lines, the wash column may be manufactured more cost effective, also for larger diameters of the bed forming chamber, while an evenly distributed bed may be obtained.

At an other end of the bed forming chamber, opposite the suspension supply line, the packed bed of solid particles may be disintegrated by for example a rotating knife, or may be continuously disintegrated under the influence of the impulse of liquid extracted from the suspension and supplied to the bed forming chamber for washing the packed bed.

By providing a dummy pipe supported by the suspension supply line, forming of a packed bed may be prevented at the position of the dummy pipe. The dummy pipe may extend longitudinally over the height of the bed forming chamber between the end of the suspension supply line at one end of the bed forming chamber and the opposite other end of the bed forming chamber. When the dummy pipe and/or the suspension supply is placed approximately in the centre of the bed forming chamber, a rotating knife may be applied to disintegrate the packed bed.

By providing a plurality of filter pipes extending over the height of the bed forming chamber arranged approximately parallel to each other, liquid may be extracted from the suspension to form a packed bed of solid particles at different positions in the bed forming chamber. The filtrate extraction means may comprise filter pipes or filtrate extraction pipes. A hydraulic wash column may or may not comprise filter pipes. Small diameter hydraulic wash columns may be provided without filter pipes in the bed forming chamber, the filters may then be arranged in a side wall of the bed forming chamber.

Further advantageous embodiments are represented in the subclaims.

The invention further relates to a method for processing a suspension of solid particles.

The invention will further be elucidated on the basis of an exemplary embodiment which is represented in a drawing. The exemplary embodiment is given by way of non-limitative illustration of the invention.

In the drawing:
Fig. 1 shows a schematic view of an embodiment of a wash column not according to the invention insofar as it has no distribution element;
Fig. 2 shows a schematic view of a second embodiment of a wash column not according to the invention insofar as it has no distribution element;
Fig. 3 shows a schematic view of a third embodiment of a wash column according to the invention;
Fig. 4 shows a schematic view of a fourth embodiment of a wash column according to the invention;
Fig. 5 shows a schematic view of a fifth embodiment of a wash column according to the invention;
Fig. 6 shows a schematic view of a sixth embodiment of a wash column according to the invention;
Fig. 7 shows a schematic view of a seventh embodiment of a wash column, not according to the invention insofar as it has no distribution element; and
Fig. 8 shows a schematic view of an eighth embodiment of a wash column not according to the invention insofar as it has no distribution element.

It is noted that the figures are only schematic representations of embodiments of the invention that are given by way of non-limiting example. In the figures, the same or corresponding parts are designated with the same reference numerals.

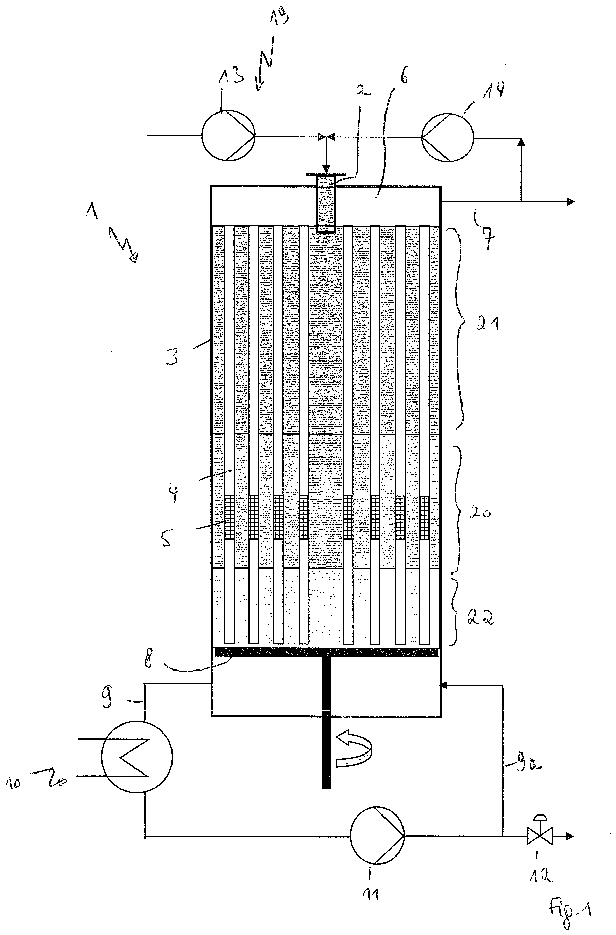

In Fig. 1 a hydraulic wash column 1 is shown to which suspension of solid particles in a liquid, comprising e.g. a melt and solid particles, is fed via the suspension supply means 19, comprising the suspension supply line 2. The wash column 1 comprises a bed forming chamber 3 in which a packed bed of solid particles can be formed. The bed is only subject to hydraulic forces, rotating or stirring equipment for providing an evenly distributed bed or for distributing the suspension is omitted. The suspension is supplied directly to the bed forming chamber 3 via the suspension supply line 2. The suspension supply line 2 ends at one end of the wash column 1 in the bed forming chamber 3. In this embodiment, the suspension is fed to the bed forming chamber 3 at an upper end thereof and then flows downwards in a suspension zone 21.

In this embodiment, the wash column 1 comprises as filtrate extraction means a plurality of filter pipes 4 to extract liquid from the suspension as to form the packed bed of solid particles in the bed forming chamber 3. Each filter pipe 4 comprises a filter 5. In the region of the filter 5, the liquid fraction (mother liquor) from the suspension flows into the pipes 4. The solid particles of the suspension cannot pass the filters 5 and remain in the bed forming chamber 3 to form a packed bed of solid particles in the concentration/thickening zone 20.

The filter pipes 4 extend over the height of the bed forming chamber 3 and are arranged approximately parallel to each other. At the upper end of the bed forming chamber 3, a filtrate collecting chamber 6 is provided in which the filter pipes 4 end. Liquid extracted from the suspension via the filters 5 is collected in the filtrate collecting chamber 6. The pressure in the filtrate collecting chamber 6 is lower than the pressure in the bed forming chamber 3, thus the liquid may be extracted from the suspension and may flow then upwards in the filter pipes 4 towards the filtrate collecting chamber 6. The filtrate thus collected is discharged via discharge line 7. Part of the filtrate can be fed via pump 14 and the suspension supply line 2 again to the bed forming chamber. In this embodiment, the suspension is pressurized by a pump 13 and fed to the bed forming chamber 3 under pressure, such that the pressure in the bed forming chamber 3 is larger than the pressure in the filtrate collecting chamber 6. Here, the suspension supply means 19 comprise the pump 13 and the suspension supply line 2.

The wash column 1 may also comprise less filter pipes, or more filter pipes, or may even comprise no filter pipes. When no filter pipes are provided in the wash column 1, the filtrate extraction means and/or filtrate collecting chamber may be provided at the wall of the bed forming chamber to extract and/or collect liquid from the suspension, e.g. because the pressure in the filtrate extraction means is lower than the pressure in the bed forming chamber 3.

In this embodiment, the packed bed of solid particles is disintegrated by means of a rotating knife 8 at the lower end of the wash column 1. The knife 8 scrapes off particles of the packed bed which may then pass through adjacent slots or other types of openings to allow the scraped off particles to pass through the knife 8. The scraped off solid particles are in this embodiment transported via a line 9 to a melter 10 with circulating melt. Pump 11 circulates the melt via line 9a. The purified melt is taken via valve 12 from the wash column 1. The pressure at the discharge side of the wash column 1 is set with valve 12 in such a way that a small fraction of the purified melt is forced into the packed bed of particles. The melt forced to the lower end of the bed forming chamber 3 is a washing liquid that serves to wash the solid particles in a washing zone 22, thus preventing undesired constituents of the melt from seeping through the lower end of the bed forming chamber 3.

In this embodiment, the suspension supply line 2 ends approximately centrally in the bed forming chamber 3. Due to the pressure and/or the speed with which the suspension is fed to the bed forming chamber 3, the suspension is turbulent and is spread over approximately the entire cross-section of the bed forming chamber 3, thus allowing forming a bed with an approximately level upper layer. Despite a plurality of filter pipes 4 and only one suspension supply line 2 to the bed forming chamber 3, the suspension is distributed approximately evenly over the bed forming chamber 3 and an approximately even upper layer of the bed can be formed.

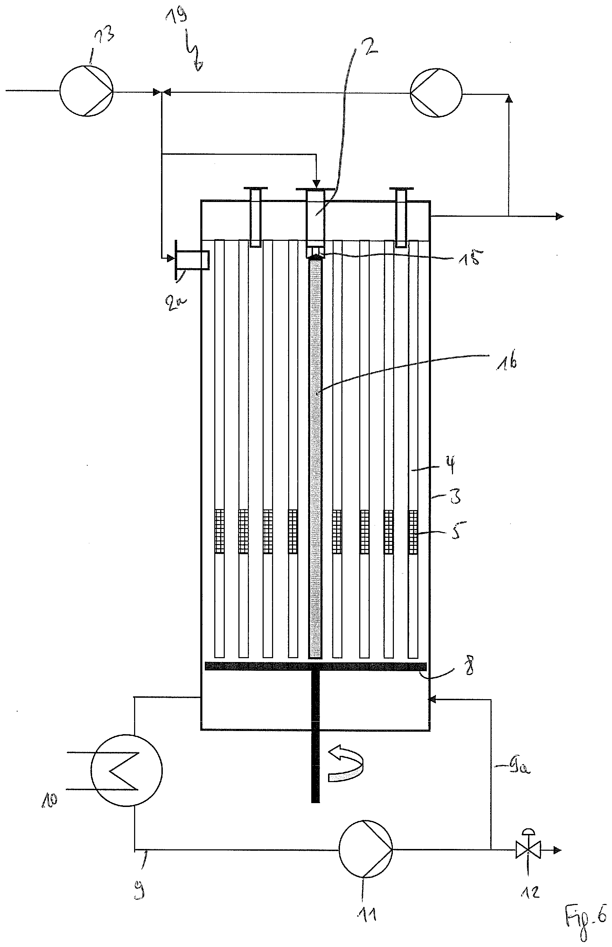

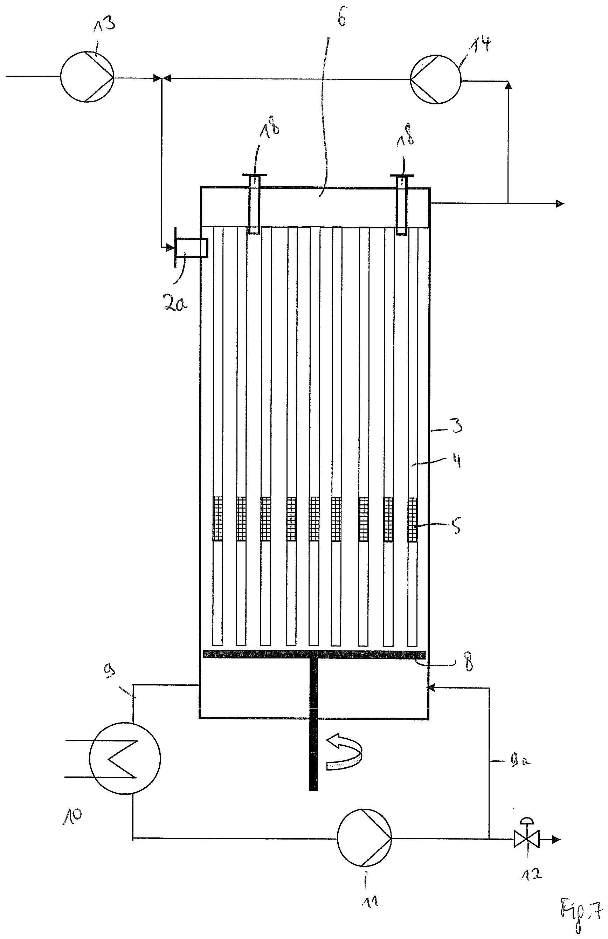

Also, only one suspension supply 2 suffices for a wash column with relatively large diameters, e.g. with a cross-section of approximately 0,25 m² to 1 m². More than one suspension supply line 2 may end in the bed forming chamber, such as for example shown in Fig. 6. Fig. 6 shows a wash column 1 with a suspension supply line 2a that goes through the wall of the bed forming chamber 3. Preferably, the suspension supply line 2a may end at the wall of the bed forming chamber 3, preferably upstream of the bed. Also, the suspension supply line 2a may end in the bed forming chamber 3 at the upper end thereof through the side wall only, as e.g shown in Fig. 7. In this embodiment, the suspension supply 2a may extend somewhat in the bed forming chamber 3 since the bed is mainly formed below the suspension supply line 2a. In an embodiment, the suspension supply line 2, 2a ends at one end of the bed forming chamber 3, upstream of the bed to be formed. The suspension supply line 2, 2a thus ends between the bed and an end wall of the bed forming chamber 3. When the bed flows downward, the suspension supply line 2, 2a ends above the bed in the bed forming chamber 3.

In the embodiment shown in Fig. 1, the suspension supply line 2 crosses the filtrate collecting chamber 6. Because only one, or a limited number of suspension supply lines 2 is provided, the disturbance of the filtrate collecting chamber 6 may be minimized. The filtrate collecting chamber 6 may be provided with stiffening means that are adapted for the filtrate collecting chamber 6 for stiffening the filtrate collecting chamber 6 against the pressure difference with the bed forming chamber 3.

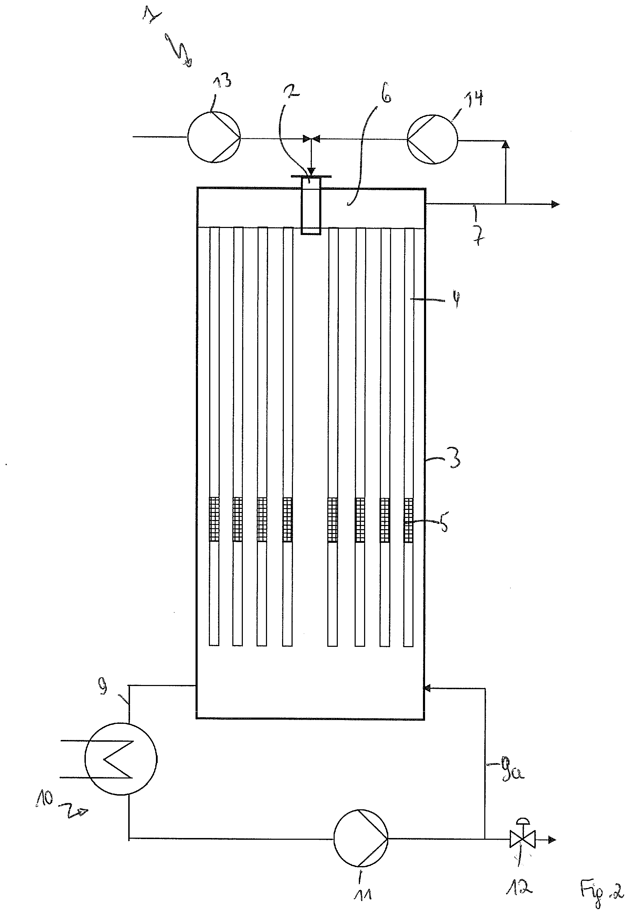

Fig. 2 shows a second embodiment of the wash column 1 according to the invention. Disintegrating the packed bed is achieved by transmitting the impulse from the washing liquid to the packed bed, supplied to the lower end of the bed forming chamber 3 via line 9a. Under the influence of the impulse of the washing liquid the bed is detached, such that solid particles from the bed are incorporated in the washing liquid. Mechanical disintegration means, such as a rotating knife, may thus be omitted. The pure product is thus obtained as a discharge flow of the recirculating washing liquid.

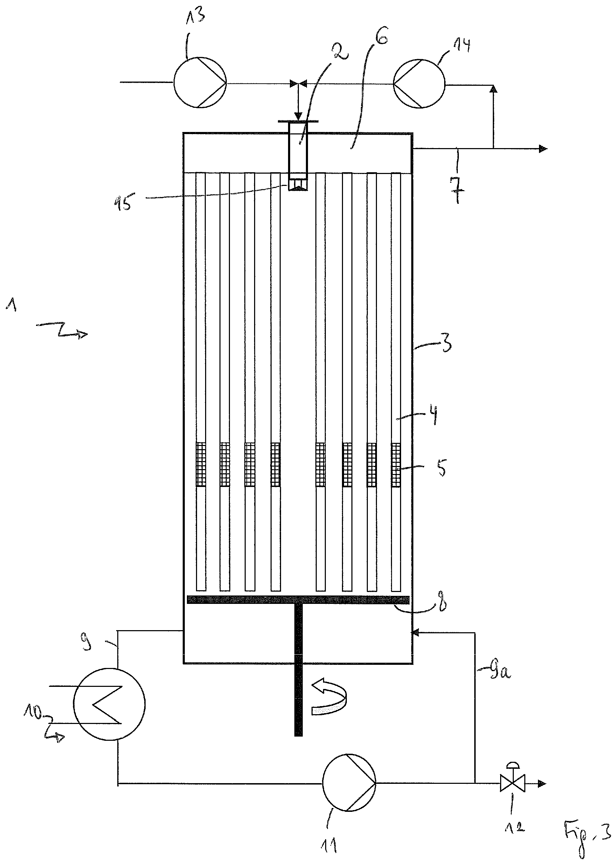

Fig. 3 shows a third embodiment of the wash column 1 according to the invention. The suspension supply line 2 comprises a distribution element 15 for further spreading the suspension flowing out of the suspension supply line. Via the distribution element 15, the suspension is fed to the bed forming chamber 3 radially as to reach also the outer wall of the bed forming chamber 3. In particular, for a bed forming chamber 3 with a relatively large diameter, spreading the suspension radially may be advantageous, because the range of the spreaded suspension may increase due to the distribution element 15. In this example, the distribution element is provided as an end piece 15 on the suspension supply line 2 with radial openings to spread the suspension radially in the bed forming chamber 3. The distribution element may also be a plate element placed transversely to the flow direction in the output flow of the suspension. Also, the distribution element as end piece may have radial and axial openings.

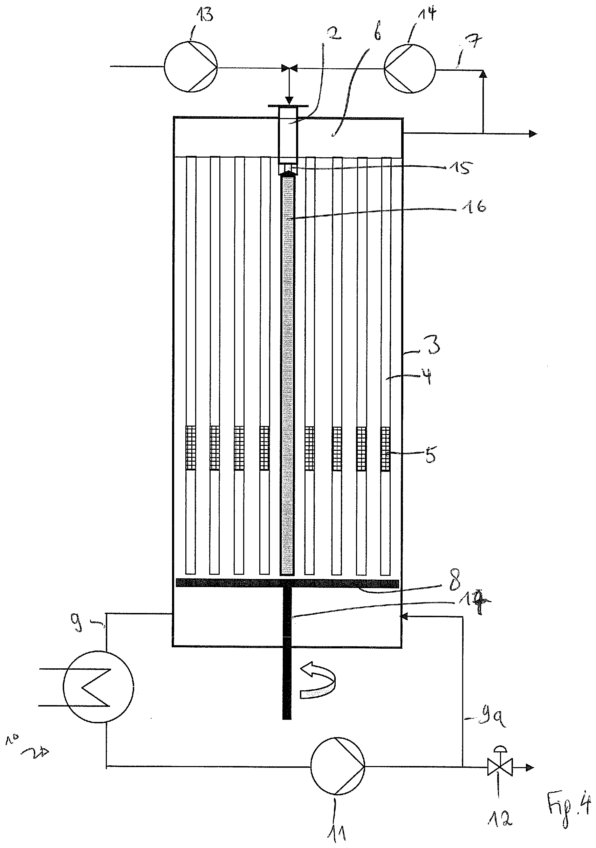

As shown in Fig. 4, under the suspension distribution element 15, a dummy pipe 16 may be placed to prevent forming of the bed thereat. Rotating knifes 8 that are centrally supported onto a shaft 17 may not be able to disintegrate the bed in the middle at the position of the shaft 17. To prevent a bed being formed at the position where the rotating knife 8 cannot disintegrate the bed, a dummy pipe 16 may be placed under the suspension supply line 2.

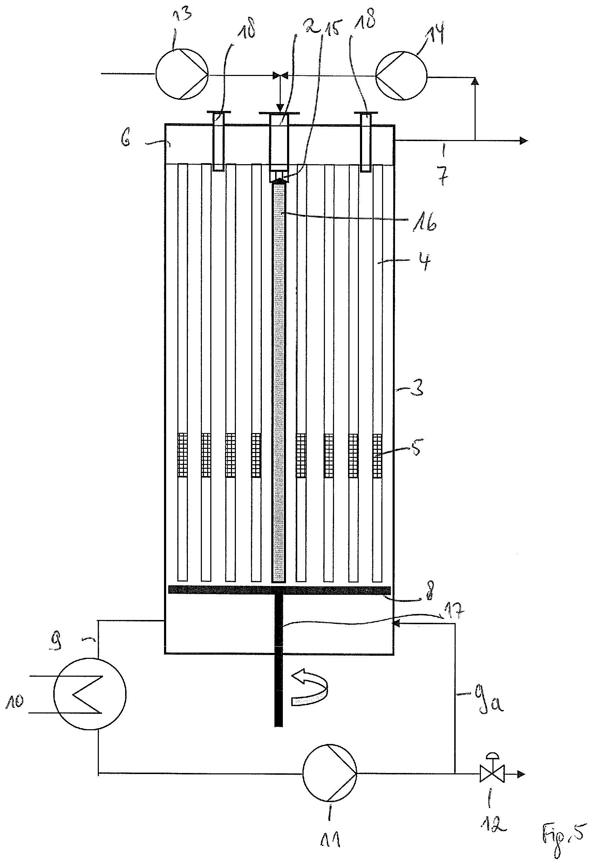

A fifth embodiment of the wash column according to the invention is shown in Fig. 5. Fig. 5 shows additionally ports for instrumentation or instrumentation pipes 18 that cross the filtrate collecting chamber 6. Since only the suspension supply line 2 crosses the filtrate collecting chamber 6, there is sufficient space left for ports for instrumentation 18 that cross the filtrate collecting chamber 6 and that may be positioned relatively optimal between the filtrate pipes 4. Since instruments brought into the column 3 through the ports for instrumentation 18 are parallel to the flow of the bed, these instruments may form no blockage to the flow of the bed. The ports for instrumentation 18 may be used to accommodate instruments for measuring for example temperature and/or pressure and/or speed and/or height of the bed. The instrumentation pipes 18 may be pipes that are arranged to contain instrumentation, or may be pipes that contain themselves the instrumentation. In view of the large forces of the packed bed moving downwards, by providing instruments hanging downwards into the moving bed through the instrumentation pipes, the forces on the instruments may remain acceptable. The instrumentation pipes 18 may for example be pipes that enclose an instrumentation head that can be removed or exchanged from the instrumentation pipe 18, which may be advantageous in case of failure or maintenance of the instrumentation head. Alternatively, the instrumentation pipe itself may be fitted with the instrumentation head.

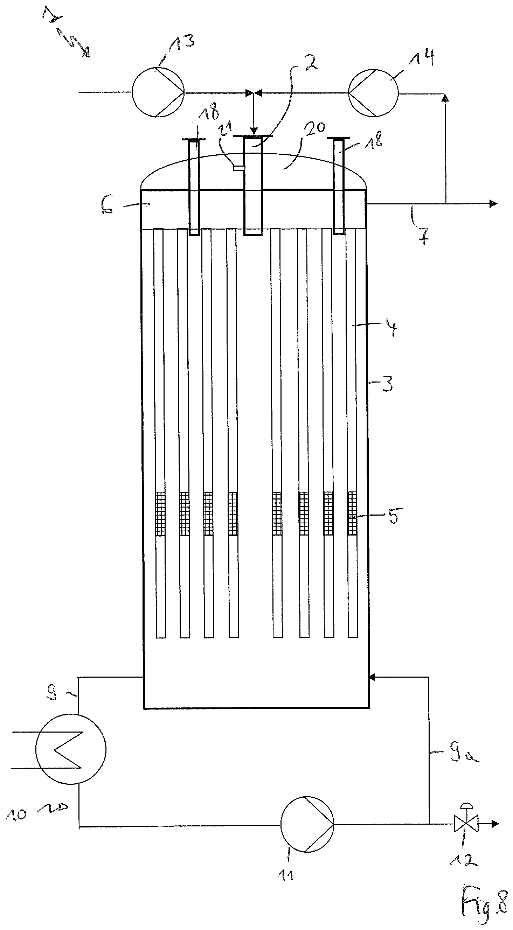

Fig. 8 shows another embodiment of a wash column 1 according to the invention. A single suspension supply line 2 is provided that crosses the filtrate collecting chamber 6. Also, two instrumentation pipes 18 are provided. In this embodiment, the wash column 1 is provided with a pressure chamber 20 that is located above the filtrate collecting chamber 6. The suspension supply line 2 and the instrumentation pipes 18 cross the pressure chamber 20 also. Preferably, the pressure in the pressure chamber 20 is approximately equal to the pressure in the bed forming chamber 3. By providing an approximately equal pressure above and below the filtrate collecting chamber 6, stiffening of the filtrate collecting chamber 6 may become easier. The filtrate collecting chamber 6 is subject to a lower pressure than the pressure in the bed forming chamber 3 and/or the pressure chamber 20. The pressure chamber 20 may be provided with a spherical end to accommodate the relatively high pressure, as shown in Fig. 8. Also, the top and/or bottom wall of the filtrate collecting chamber 6 may be spherical and/or concave to more easily accommodate the pressure difference between the filtrate collecting chamber 6 and the bed forming chamber 3 and/or pressure chamber 20.

The pressure in the pressure chamber 20 may be equal to the pressure in the bed forming chamber 3, for example by providing a vent 21 in the suspension supply line 2, as shown in Fig. 8. The pressure chamber 20 and the bed forming chamber 3 are then in connection to each other and are thus at the same pressure. Alternatively, the pressure chamber 20 may be closed and may be filled with a pressurized gas and/or liquid.

## Claims

1. A hydraulic wash column for processing a suspension of solid particles in a liquid comprising
a bed forming chamber (3) comprising an upper end at which the suspension is to be fed to the bed forming chamber (3), a suspension zone (21) where the suspension flows downwards from the upper end after being fed, and a concentration/thickening zone (20) at which a packed bed of solid particles can be formed,
a plurality of filter pipes (4) comprising a filter (5) as filtrate extraction means for extracting liquid from the suspension as to form the packed bed of solid particles in the bed forming chamber (3), wherein the filtrate extraction means further comprise a filtrate collecting chamber (6) for collecting the liquid extracted from the suspension; **characterized in that** a suspension supply line (2) for supplying the suspension to the upper end of the bed forming chamber (3), wherein the suspension supply line (2) crosses the filtrate collecting chamber (6) to end in the bed forming chamber (3); and the end of the suspension supply line (2) in the bed forming chamber (3) comprises a distribution element (15) for further spreading the suspension flowing out of the suspension supply line (2).

2. Hydraulic wash column according to any one of the preceding claims, wherein the end of the suspension supply line (2) is positioned centrally in the bed forming chamber (3).

3. Hydraulic wash column according to any one of the preceding claims, wherein one suspension supply line (2) is arranged per 0,25 m² to 1 m² cross-section of the bed forming chamber (3).

4. Hydraulic wash column according to any one of the preceding claims, wherein the hydraulic wash column (1) comprises a plurality of filter pipes (4) extending longitudinally over the height of the bed forming chamber (3) arranged parallel to each other.

5. Hydraulic wash column according to any one of the preceding claims, further comprising means (8) for disintegrating the packed bed.

6. Hydraulic wash column according to claim 5, wherein the means (8) for disintegrating the packed bed is a rotating knife.

7. Hydraulic wash column according to any one of the preceding claims, further comprising a dummy pipe (16) supported by the suspension supply line (2) to prevent forming of the bed thereat.

8. Hydraulic wash column according to any one of the preceding claims, further comprising at least one instrumentation pipe (18) crossing the filtrate collecting chamber (6) ending in the bed forming chamber (3).

9. A method for processing a suspension of solid particles in liquid in a hydraulic wash column, comprising
supplying the suspension via a suspension supply line (2, 2a) that ends directly in a bed forming chamber (3) at an upper end of the bed forming chamber (3), from which upper end the suspension flows downwards after being fed, and
extracting liquid from the suspension via a plurality of filter pipes (4) comprising a filter (5) as filtrate extraction means to form a packed bed of solid particles at a concentration/thickening zone (20),
wherein the filtrate extraction means further comprise a filtrate collecting chamber (6) for collecting the liquid extracted from the suspension, **characterized in that** wherein the suspension supply line (2) crosses the filtrate collecting chamber (6) to end in the bed forming chamber (3), and the end of the suspension supply line (2) in the bed forming chamber (3) comprises a distribution element (15) for further spreading the suspension flowing out of the suspension supply line (2).

## Patentansprüche

1. Hydraulische Waschsäule zur Verarbeitung einer Suspension von Feststoffpartikeln in einer Flüssigkeit, umfassend
eine Bettbildungskammer (3), umfassend ein oberes Ende, an dem die Suspension der Bettbildungskammer (3) zugeführt werden soll, eine Suspensionszone (21), wo die Suspension, nachdem sie zugeführt wurde, abwärts von dem oberen Ende fließt, und eine Konzentrations-/Verdickungszone (20), an der ein gepacktes Bett von Feststoffpartikeln gebildet werden kann,
eine Vielzahl von Filterröhren (4), umfassend einen Filter (5) als Filtratextraktionsmittel zum Extrahieren von Flüssigkeit aus der Suspension, um das gepackte Bett von Feststoffpartikeln in der Bettbildungskammer (3) zu bilden, wobei die Extraktionsmittel ferner eine Filtratsammelkammer (6) zum Sammeln der aus der Suspension extrahierten Flüssigkeit umfassen; **dadurch gekennzeichnet, dass**
eine Suspensionszuführleitung (2) zum Zuführen der Suspension zu dem oberen Ende der Bettbildungskammer (3), wobei die Suspensionszuführleitung (2) die Filtratsammelkammer (6) kreuzt, um in der Bettbildungskammer (3) zu enden;
das Ende der Suspensionszuführleitung (2) in der Bettbildungskammer (3) ein Verteilelement (15) umfasst, um die aus der Suspensionszuführleitung (2) herausfließende Suspension weiter zu verteilen.

2. Hydraulische Waschsäule nach einem der vorhergehenden Ansprüche, wobei das Ende der Suspensionszuführleitung (2) mittig in der Bettbildungskammer (3) positioniert ist.

3. Hydraulische Waschsäule nach einem der vorhergehenden Ansprüche, wobei eine Suspensionszuführleitung (2) pro 0,25 m² auf 1 m² Querschnitt der Bettbildungskammer (3) angeordnet ist.

4. Hydraulische Waschsäule nach einem der vorhergehenden Ansprüche, wobei die hydraulische Waschsäule (1) eine Vielzahl von Filterröhren (4) umfasst, die der Länge nach über die Höhe der Bettbildungskammer (3) parallel zueinander angeordnet sind.

5. Hydraulische Waschsäule nach einem der vorhergehenden Ansprüche, ferner umfassend ein Mittel (8) zum Zerkleinern des gepackten Betts.

6. Hydraulische Waschsäule nach Anspruch 5, wobei das Mittel (8) zum Zerkleinern des gepackten Betts ein rotierendes Messer ist.

7. Hydraulische Waschsäule nach einem der vorhergehenden Ansprüche, ferner umfassend eine Blindröhre (16), gestützt von der Suspensionszuführleitung (2), um zu verhindern, dass sich das Bett daran bildet.

8. Hydraulische Waschsäule nach einem der vorhergehenden Ansprüche, ferner umfassend mindestes eine Instrumentierungsröhre (18), die die Filtratsammelkammer (6) kreuzt und in der Bettbildungskammer (3) endet.

9. Verfahren zur Verarbeitung einer Suspension von Feststoffpartikeln in Flüssigkeit in einer hydraulischen Waschsäule, umfassend
das Zuführen der Suspension über eine Suspensionszuführleitung (2, 2a), die direkt in einer Bettbildungskammer (3) an einem oberen Ende der Bettbildungskammer (3) endet, von welchem Ende aus die Suspension, nachdem sie zugeführt wurde, abwärts fließt, und
das Extrahieren von Flüssigkeit aus der Suspension über eine Vielzahl von Filterröhren (4), umfassend einen Filter (5) als Filtratextraktionsmittel zum Bilden eines gepackten Betts von Feststoffpartikeln an einer Konzentrations-/Verdickungszone (20),
wobei die Filtratextraktionsmittel ferner eine Filtratsammelkammer (6) zum Sammeln der aus der Suspension extrahierten Flüssigkeit umfassen,
**dadurch gekennzeichnet, dass**
wobei die Suspensionszuführleitung (2) die Filtratsammelkammer (6) kreuzt, um in der Bettbildungskammer (3) zu enden, und
das Ende der Suspensionszuführleitung (2) in der Bettbildungskammer (3) ein Verteilelement (15) umfasst, um die aus der Suspensionszuführleitung (2) herausfließende Suspension weiter zu verteilen.

## Revendications

1. Colonne de lavage hydraulique pour transformer une suspension de particules solides en un liquide, comprenant :
une chambre de formation de lit (3) comprenant une extrémité supérieure au niveau de laquelle la suspension doit être alimentée vers la chambre de formation de lit (3), une zone de suspension (21) où la suspension s'écoule vers le bas à partir de l'extrémité supérieure après avoir été alimentée, et une zone de concentration/épaississement (20) au niveau de laquelle un lit tassé de particules solides peut être formé,
une pluralité de tuyaux de filtre (4) comprenant un filtre (5) en tant que moyen d'extraction de filtrat pour extraire du liquide depuis la suspension de manière à former le lit tassé de particules solides dans la chambre de formation de lit (3), dans laquelle le moyen d'extraction de filtrat comprend en outre une chambre de recueil de filtrat (6) pour recueillir le liquide extrait de la suspension ; **caractérisé par**
une ligne d'alimentation de suspension (2) pour alimenter la suspension vers l'extrémité supérieure de la chambre de formation de lit (3), dans laquelle la ligne d'alimentation de suspension (2) traverse la chambre de recueil de filtrat (6) pour finir dans la chambre de formation de lit (3) ; et
l'extrémité de la ligne d'alimentation de suspension (2) dans la chambre de formation de lit (3) comprend un élément de distribution (15) pour diffuser davantage la suspension s'écoulant à l'extérieur de la ligne d'alimentation de suspension (2).

2. Colonne de lavage hydraulique selon la revendication précédente, dans laquelle l'extrémité de la ligne d'alimentation de suspension (2) est positionnée de manière centrale dans la chambre de formation de lit (3).

3. Colonne de lavage hydraulique selon l'une quelconque des revendications précédentes, dans laquelle une ligne d'alimentation de suspension (2) est agencée pour une section transversale de 0,25 m² à 1 m² de la chambre de formation de lit (3).

4. Colonne de lavage hydraulique selon l'une quelconque des revendications précédentes, dans laquelle la colonne de lavage hydraulique (1) comprend une pluralité de tuyaux de filtre (4) s'étendant longitudinalement sur la hauteur de la chambre de formation de lit (3) et agencés parallèlement les uns aux autres.

5. Colonne de lavage hydraulique selon l'une quelconque des revendications précédentes, comprenant en outre un moyen (8) pour désintégrer le lit tassé.

6. Colonne de lavage hydraulique selon la revendication 5, dans laquelle le moyen (8) pour désintégrer le lit tassé est une lame rotative.

7. Colonne de lavage hydraulique selon l'une quelconque des revendications précédentes, comprenant en outre un tuyau fictif (16) supporté par la ligne d'alimentation de suspension (2) pour y empêcher la formation du lit.

8. Colonne de lavage hydraulique selon l'une quelconque des revendications précédentes, comprenant en outre au moins un tuyau d'instrumentation (18) traversant la chambre de recueil de filtrat (6) se terminant dans la chambre de formation de lit (3).

9. Procédé pour transformer une suspension de particules solides en un liquide dans une colonne de lavage hydraulique, comprenant les étapes consistant à :
alimenter la suspension via une ligne d'alimentation de suspension (2, 2a) qui se termine directement dans une chambre de formation de lit (3) au niveau d'une extrémité supérieure de la chambre de formation de lit (3), extrémité supérieure à partir de laquelle la suspension s'écoule vers le bas après avoir été alimentée, et
extraire du liquide à partir de la suspension via une pluralité de tuyaux de filtre (4) comprenant un filtre (5) en tant que moyen d'extraction de filtrat pour former un lit tassé de particules solides au niveau d'une zone de concentration/épaississement (20),
dans lequel le moyen d'extraction de filtrat comprend en outre une chambre de recueil de filtrat (6) pour recueillir le liquide extrait de la suspension,
**caractérisé en ce que**
la ligne d'alimentation de suspension (2) traverse la chambre de recueil de filtrat (6) pour finir dans la chambre de formation de lit (3), et
l'extrémité de la ligne d'alimentation de suspension (2) dans la chambre de formation de lit (3) comprend un élément de distribution (15) pour diffuser davantage la suspension s'écoulant à l'extérieur de la ligne d'alimentation de suspension (2).
